# EUROPEAN PATENT APPLICATION

(11) **EP 1 645 519 A1**
(43) Date of publication of application: **12.04.2006**
(21) Application number: 05021771.0
(22) Date of filing: 06.10.2005
(51) Int. Cl.: B65D 41/04, B65D 41/62, B65D 47/08, B65D 47/24, B65D 47/14, B29C 45/16

(54) **Dual material bottle cap**

(30) Priority: 06.10.2004 US 959459
(71) Applicant: Rubbermaid Incorporated, Fairlawn, Ohio 44333 (US)
(72) Inventor: Boyle, Justin E., Akron, Ohio 44319 (US); Webb, Michael D., Wooster, Ohio 44691 (US); States, Robert Gerald III, Wooster, Ohio 44691 (US)
(74) Representative: Winkler, Andreas Fritz Ernst

(57) **Abstract**

A bottle cap is manufactured including a base cap and an integrally molded overlayer and gasket combination. The base cap is formed of a first material and includes at least one aperture passing through the base for the formation of the overlayer and gasket. The overlayer and gasket are formed by injecting a second material over the base cap and through the aperture. In particular, the overlayer is molded onto at least a portion of an outer surface of the base cap, while the gasket is simultaneously molded through the aperture, to form a sealing gasket on an underside of the base cap, integrally connected to the overlayer. The base cap and the gasket are constructed and arranged to cooperatively seal an opening of a fluid container.

## Description

### Field of the Invention

The present invention generally relates to bottle caps, and more particularly to a dual material bottle cap having a base cap including an integrally formed sealing gasket and overlayer, and a method of manufacturing the same.

### Description of the Related Art

Many forms of bottle caps exist for sealing containers. For example, in certain circumstances a plastic bottle cap is used to seal a plastic bottle container. Oftentimes it is desirable to minimize or prevent leaking between the bottle cap and the bottle container. The tolerance window between the cap and the container to create a substantially water resistant seal is quite narrow and may result in a bottle cap that allows the fluid in the container to leak out.

There have been previous attempts to solve leaking problems between the cap and the bottle. Some attempts have included the insertion of a separately manufactured rubber gasket into a bottle cap to create a soft material better suited to form a seal with a hard plastic container. The insertion of the rubber gasket, however, typically requires one or more additional manufacturing steps of inserting, and/or attaching the separate gasket into the bottle cap itself. Still other attempts have included the utilization of a hot melt to form a flowed-in gasket poured into an inverted and previously manufactured bottle cap. Again, the hot melt process typically requires additional and separate manufacturing equipment and steps to assemble both the bottle cap and the gasket.

### Brief Description of the Drawings

FIG. I is a front perspective view of one example of a bottle cap constructed in accordance with the teachings of the present invention.

FIG. 2 is a bottom plan view of the bottle cap of FIG. 1 with the overlayer and gasket partially removed to illustrate the construction of the base cap and distinguish the overlayer and the gasket from the base cap.

FIG. 3 is a cross sectional view of the bottle cap of FIG. 1, taken along line 3-3 of FIG. 2, but only showing a first molded base cap of the cap.

FIG. 4 is a cross sectional view of the bottle cap of FIG. 3, and showing both a first molded base cap and a second integrally molded overlayer and gasket of the bottle cap.

FIG. 5A is a perspective view of an optional tether assembled with a fluid container and for use in conjunction with the bottle cap of FIG. 1.

FIG. 5B is a cross sectional view of the bottle cap of FIG. 5A in an assembly including a fluid container and an optional tether device.

FIG. 6 is a front perspective view of another example of a bottle cap constructed in accordance with the teachings of the present invention.

FIG. 7A is a cross sectional view of the bottle cap of FIG. 6, taken along line 7A-7A, showing both a first molded base cap and a second integrally molded overlayer and gasket, and showing a closure spout in a closed position.

FIG. 7B is a cross sectional view of the bottle cap of FIG. 7A, showing both a first molded base cap and a second integrally molded overlayer and gasket, and showing the closure spout in an opened position.

FIG. 8 is a front perspective view of another example of a bottle cap constructed in accordance with the teachings of the present invention.

FIG. 9 is a front perspective view of an example of a closure flap for use in combination with the bottle cap of FIG. 8.

FIG. 10A is a cross sectional view of the bottle cap of FIG. 8, taken along line 10A-10A, and showing both a first molded base cap and a second integrally molded overlayer and gasket, and showing the assembled closure flap in the closed position.

FIG. 10B is a cross sectional view of the bottle cap of FIG. 10A, showing both a first molded base cap and a second integrally molded overlayer and gasket, and showing the assembled closure flap in the opened position.

### Detailed Description of the Disclosure

The embodiments described herein are not intended to be exhaustive or to limit the scope of the invention to the precise forms disclosed. Instead, the following embodiments have been described in order to best explain the principles of the invention and to enable others of ordinary skill in the art to follow its teachings.

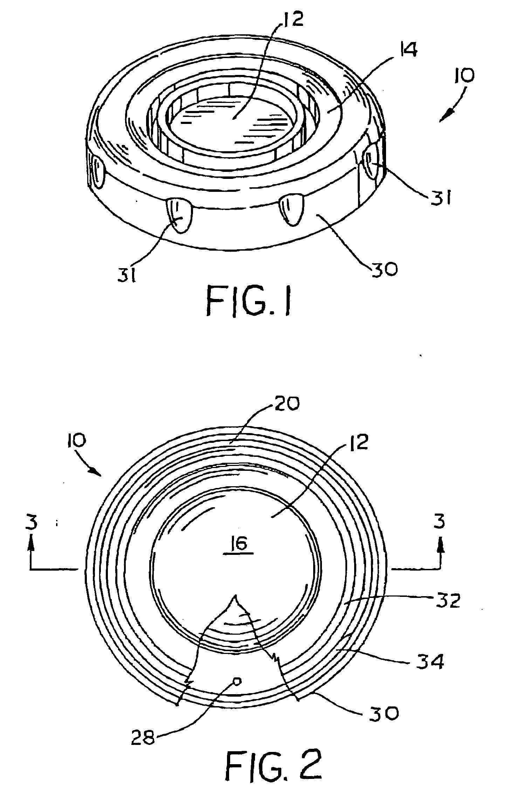

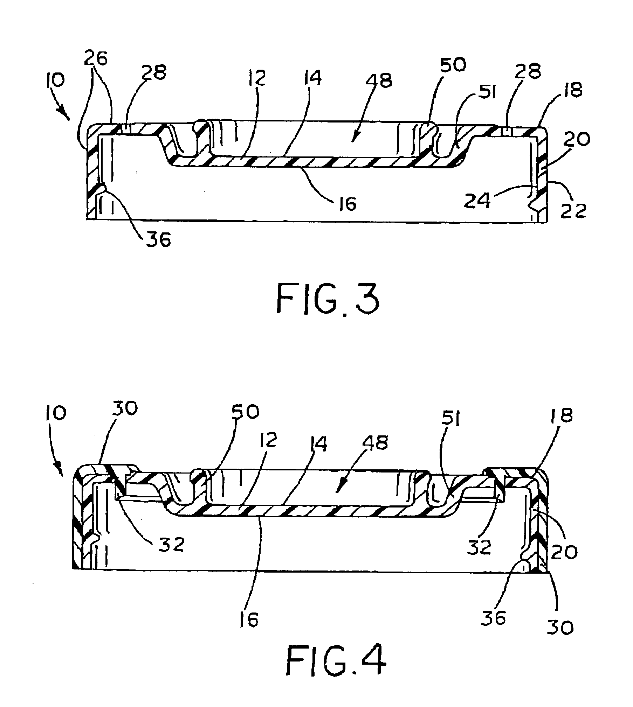

Referring now to FIGS. 1-5B of the drawings, a bottle cap 10 constructed in accordance with the teachings of the present invention is shown. The bottle cap 10 includes a lid portion or base cap 12 as shown in FIG. 3 that is formed of a first material. The base cap 12 has a top outer side 14, an underside 16, a perimeter 18, and a skirt wall 20 extending downward from the perimeter 18. The skirt wall 20 has an exterior side 22 and an interior side 24. Together, the top outer side 14 and the exterior side 22 form an outer surface 26. The base cap 12 also includes at least one aperture 28 (best seen in FIGS. 2 and 3) passing through the base cap 12 between the top outer side 14 and the underside 16. In the illustrated example, the base cap 12 contains at least one aperture 28 (four in this example circumferentially spaced apart) to aid in the formation of a gasket, as will be described. The base cap 12 is formed of a first material having a first durometer.

The bottle cap 10 further includes an overlayer 30, which, in the disclosed example, is integrally molded and bonded onto at least a portion of the outer surface 26 of the base cap 12. The overlayer 30 is formed of a second material, different than the first material forming the base cap 12 and the overlayer 30 has a second durometer which is lower (i.e., softer), than the durometer of the base cap 12.

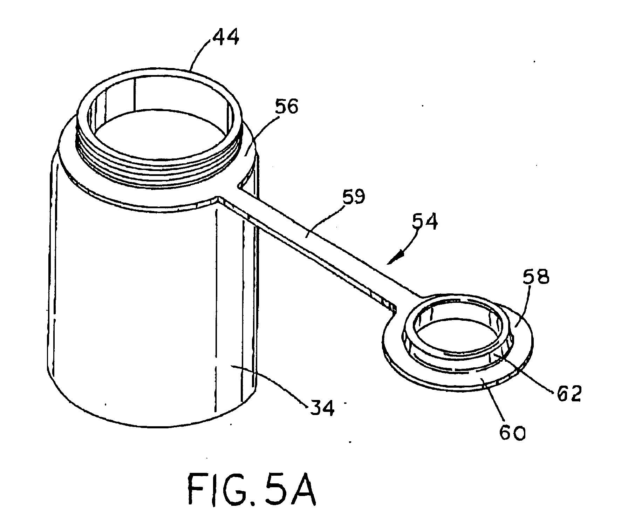

A gasket 32 is formed on at least a portion of the underside 16 of the base cap 12 simultaneously with the overlayer 30. The gasket 32 is made of the same material as the overlayer 30 and is integrally connected to the overlayer 30 through the apertures 28, as best shown in FIG. 4. In this example, the gasket 32 is an annular ring with a rectangular cross section and spaced inwardly away from the interior side 24 of the skirt wall 20. However, the gasket 32 may be formed in any suitable shape and cross-section, including for instance, circular, or the like. The gasket 32 is sized to complement the shape of a typical fluid container (FIG. 5A) to seal the container as described in detail below.

The overlayer 30 may cover any portion of the base cap 12, including for example, full coverage, minimal coverage, or any partial coverage as desired and may be aesthetic, and/or may provide for grip enhancement. For example, the overlayer 30 may optionally include a plurality of grip enhancements 31 (see FIG. 1), which, in this embodiment are a plurality of circumferentially spaced grip recesses. The overlayer 30 may include any number of grip enhancements 31, which may be any suitable size and/or shape, including for instance, recesses, dimples, extensions, protrusions, slots, ribs, nubs, bumps, or the like. In general, in addition to any aesthetic value, the grip enhancements 31 may provide the users of the cap 10 with an extra gripping surface to aid the user in the use of the cap 10.

Additionally, it will also be appreciated that the shape and size of the cap 10 and more particularly the base cap 12 and the gasket 32 may vary based upon the type of container to be sealed, the desired appearance, and/or the desired quality of the seal formed. For instance, the height, shape, cross section, contour and/or material thickness of the base cap 12 and/or the gasket 32 may be altered, increased, or decreased depending upon any number of desired characteristics, including resistance to leaks.

As best shown in FIG. 5A, the base cap 12, the gasket 32, and the skirt wall 20 are arranged to cooperatively seal an opening of a typical fluid container 34. For instance, in this example, the skirt wall 20 includes at least one helical thread 36 extending radially inward from the interior side 24 of the skirt wall 20 and around at least a portion of the interior side 24. The fluid container 34 includes an exterior wall 38 bounding a container interior 40, an opening 42, and a bottle neck 44- The bottle neck 44 is generally cylindrical and extends upwardly from an upper end of the fluid container 34. The bottle neck 44 includes an outer surface 45, an inner surface 47, and a top edge 49. The opening 42 is defined within the top edge 49 and through the bottle neck 44. The bottle neck 44 also includes a helical thread 46 extending radially outward from the outer surface 45 of the bottle neck 44 around at least a portion of the outer surface 46. The helical threads 36 and 46 are complementary such that coaxial rotation of the bottle cap 10 relative to the fluid container 34 will cause the bottle cap 10 and the fluid container 34 to join together. The gasket 32 and the underside 16 will bear against the inner surface 47 and top edge 49, respectively, to form a substantially fluid tight seal. It will be understood that joining the cap 10 and the container 34 may be accomplished in any number of suitable ways, including, for example, friction fitting, snap-fitting, tab and slot fitting, pressure fitting, or any other suitable attachment arrangement.

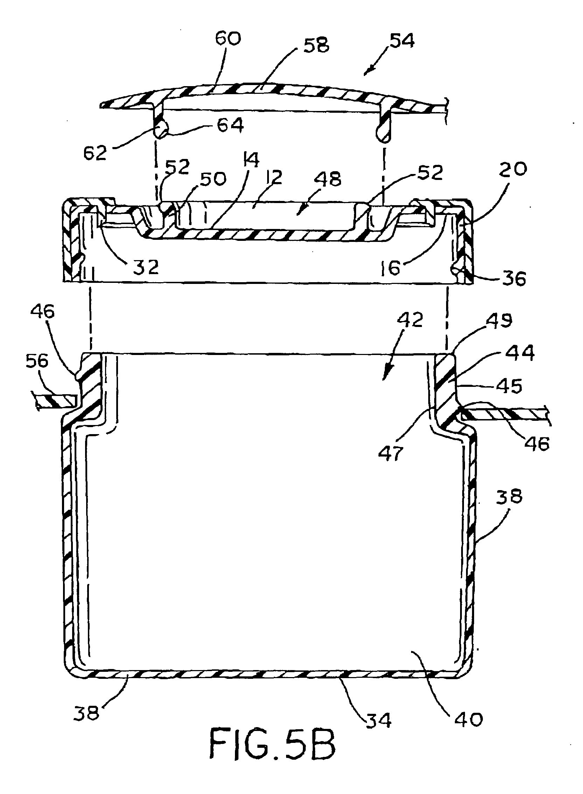

Referring now to FIGS. 5A and 5B, in the illustrated embodiment, the base cap 12 includes a generally circular molded depression 48. An annular upstanding lid retention wall 50 extends from the top outer side 14 of the base cap 12 and is spaced inward from a perimeter 51 of the depression 48. The lid retention wall 50 includes a retention rib 52 extending radially outward around the top, outer surface of the lid retention wall 50.

A tether device 54 includes a first end in the form of a circular ring 56 sized to interference fit over the neck 44 of the fluid container 34 to be retained on the neck 44 by the threads 46. The tether device 54 additionally includes a second end shown in detail in FIG. 5A in the form of a cap connector 58. In this example, the cap connector 58 and the ring 56 are coupled to one another by a tether 59 integrally connected to both. The cap connector 58 mates with the base cap 12 of the bottle cap 10. Specifically, the cap connector 58 includes a cover 60 having a circular cap retention wall 62 extending downward from the cover 60 and sized to telescope over and frictionally mate with the outer surface of the retention wall 50 in this example. The lid retention wall 62 further has a retention rib 64 extending radially inward from the surface of the retention wall 62. The rib 64 snaps over the retention rib 52 of the lid retention wall 50. When installed, the cover 60 retains the tether device 54 to the cap 10. The ring 56 retains the device 54 to the container 34 and the tether 54 secures the cap 10 to the container 34.

It will be appreciated, however, that the bottle cap 10 may not be tethered to the container, or may optionally be secured to the fluid container 34 in any number of suitable ways, including for example, by tie-string, strap, adhesive, covering, or any other suitable arrangement. Furthermore, while the fluid container 34 is illustrated as a plastic container, the container 34 may be manufactured of any suitable material, including glass, metal, ceramic, or the like.

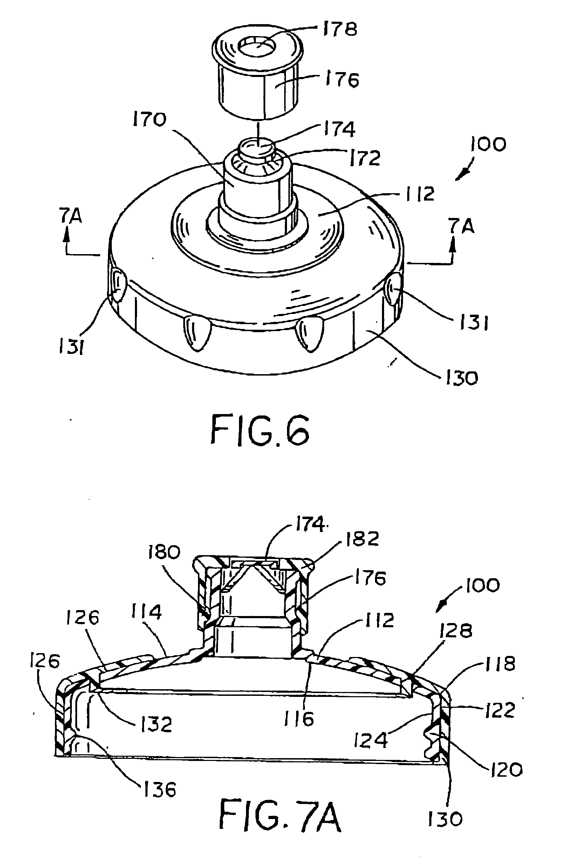

Turning now to FIGS. 6, and 7A-7B, a second example of a bottle cap 100 constructed in accordance with the teachings of the present invention is shown. The battle cap 100 includes a base cap 112 as shown in FIG. 6 that is formed of a first material having a first durometer. The base cap 112 has a top outer side 114, an underside 116, a perimeter 118, and a skirt wall a 20 extending downward from the perimeter 118. The skirt wall 120 has an exterior side 122 and an interior side 124. Together, the top outer side 114 and the outer side 122 form an outer surface 126. The base cap 112 also includes at least one aperture 128 (hidden by material in FIG. 7A) passing through the base cap 112 between the top outer side 114 and the underside 116.

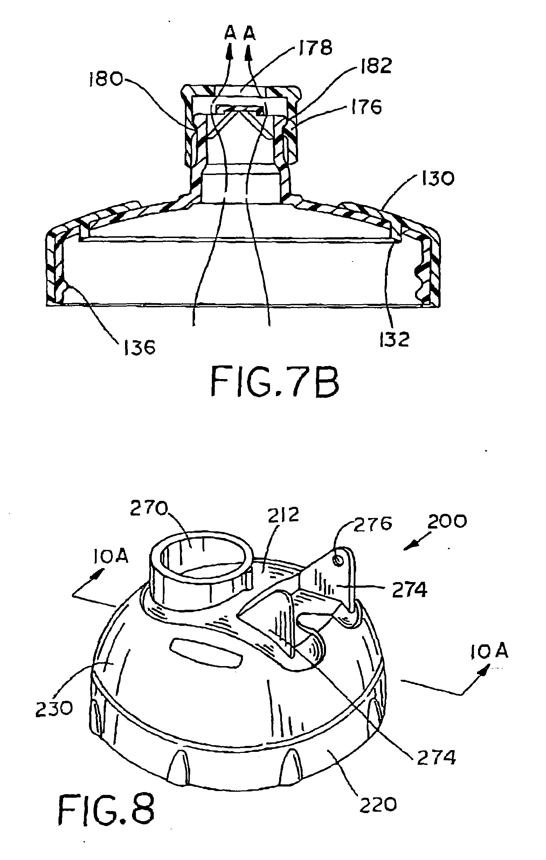

The base cap 112 also includes an elongate neck 170 extending upward from the top outer side 114 of the base cap 112. The neck 170 bounds an opening 172 and supports a closing disk 174 above the opening 172 to close a portion of the opening 172. The neck 170 is adapted to shiftably support a closure spout 176 having an opening 178 and preferably formed of the same material as the base cap 112. The closure spout 176 is shiftable between a first position (FIG. 7A) wherein the closure spout 176 closes the opening 172 of the neck 170 and a second position (FIG. 7B) wherein the closure spout 176 opens the opening 172 of the neck 170.

Specifically, in this example, the closure spout 176 includes a retention rib 180 which extends radially inward from the closure spout 176 and is adapted to be removably retained by a corresponding retention rib 182 extending radially outward from the neck 170. In this way, the closure spout 176 may be shifted between a fully depressed position (FIG. 7A) and a fully extended position (FIG. 7B). When in the depressed position, the closure spout 176 shifts along the neck 170 until the closing disk 174 bears against the inner wall of the opening 178 of the closure spout 176, forming a generally fluid tight seal. When shifted towards the fully extended position, the closure spout 176 shifts along the neck 170 until the closing disk 174 is spaced away from the wall of the opening 178, allowing fluid to flow through the neck 170 and closure spout 176 in the general direction of the arrows A.

The bottle cap 110 further includes an overlayer 130, which, in the disclosed example, is integrally molded and bonded onto at least a portion of the outer surface 126 of the base cap 112. The overlayer 130 is formed of a second material, different than the first material forming the base cap 112, and has a second durometer which is lower (i.e., softer), than the durometer of the base cap 112.

A gasket 132 is simultaneously formed with the overlayer 130 and through the apertures 128, on at least a portion of the underside 116 of the base cap 112, The gasket 132 is formed of the same material as the overlayer 130 and the gasket 132 and the overlayer 130 are integrally connected through the apertures 128, as best shown in FIGS. 7A and 7B. In this embodiment, the gasket 132 is an annular ring with a rectangular cross section and is spaced inwardly away from the interior side 124 of the skirt wall 120, however, the shape and location of the gasket 132 may vary based upon any number of various design considerations as previously described.

The overlayer 130 may cover any portion of the base cap 112, including for example, full coverage, minimal coverage, or any partial coverage as desired. As with the previous example, the overlayer 130 may include a plurality of grip enhancements 131 for aesthetic and/or grip enhancement reasons. Additionally, it will also be appreciated that the shape and size of the cap 100 and more particularly the base cap 112 and the gasket 132 may vary based upon the type of container to be sealed, the desired appearance, and/or the desired quality of the seal formed.

Just as with the embodiment of FIGS. 1-5B, together, the base cap 112, the gasket 132, and the skirt wall 120 arc arranged to cooperatively seal an opening of a typical fluid container 34 by utilizing a typical screw top arrangement. For instance, the skirt wall 120 similarly includes at least one helical thread 136 extending radially inward from the interior side 124 of the skirt wall 120 and around at least a portion of the interior side 124. The helical thread 136 cooperates with the helical thread 46 on the container 34 such that coaxial rotation of the bottle cap 100 relative the fluid container 34 will cause the bottle cap 100 and the fluid container 34 to join together. Again however, it will be appreciated that any number of other suitable closing means may be utilized to join the cap 100 with the container 34.

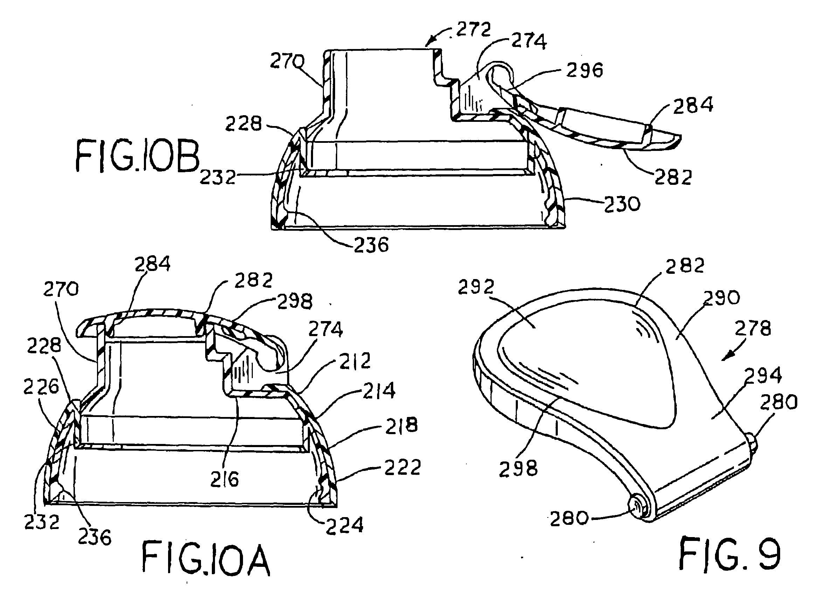

Referring now to FIGS. 8-10B, a third example of a bottle cap 200 assembled in accordance with the teachings of the present invention is shown. The bottle cap 200 includes a base cap 212 having a top outer side 214, an underside 216, a perimeter 218, and a skirt wall 220 extending downward from the perimeter 218. The skin wall 220 has an exterior side 222 and an interior side 224. In this embodiment, the base cap 212 and the skirt wall 220 are both formed having a similar shape and therefore the transition between the base cap 212 and the skirt wall 220 at the perimeter 218 is less pronounced. Thus, as illustrated, it will be understood that depending upon the shape of both the base cap 212 and the skirt wall 220, the transition between the two elements may be readily apparent, or may be undistiguishable. Together, the top outer side 214 and the exterior side 222 form an outer surface 226. The base cap 212 also includes at least one aperture 228 (hidden by material in FIG. 10A) passing through the base cap 212 between the top outer side 214 and the underside 216. As with the previous embodiments, the base cap 212 is formed of a first material having a first durometer.

The bottle cap 210 further includes an overlayer 230, which, in the disclosed example, is integrally molded and bonded onto at least a portion of the outer surface 226 of the base cap 212. The overlayer 230 is formed of a second material, different than the first material forming the base cap 212, and has a second durometer which is lower (i.e., softer), than the durometer of the base cap 212.

A gasket 232 is simultaneously formed with the overlayer 230 through the aperture 228 on at least a portion of the underside 216 of the base cap 212, and is made of the same material as the overlayer 230. The gasket 232 and the overlayer 230 are integrally connected through the apertures 228, as best shown in FIGS. 10A and 10B. In this example, the gasket 232 is an annular ring with a rectangular cross section and is spaced inwardly away from the interior side 224 of the skirt wall 220. The gasket 232 is sized to complement the shape of a typical fluid container (FIG. 5A) to scal the container as described above.

Again, the overlayer 230 may cover any portion of the base cap 212, including for example, full coverage, minimal coverage, or any partial coverage as desired and may include a plurality of grip enhancements 131 for aesthetic and/or grip enhancement reasons. Additionally, it will also be appreciated that the shape and size of the cap 200 and more particularly the base cap 272 and the gasket 232 may vary based upon the type of container to be sealed, the desired appearance, and/or the desired quality of the seal formed.

Just as with the previous embodiments the base cap 212, the gasket 232, and the skirt wall 220 are arranged to cooperatively seal an opening of a typical fluid container. In this example, the skirt wall 220 includes at least one helical thread 236 extending radially inward from the interior side 224 of the skirt wall 220 and around at least a portion of the interior side 224. As described in conjunction with the previous embodiments, the helical thread 236 may cooperate with the helical thread 46 on the container 34 such that coaxial rotation of the bottle cap 200 relative the fluid container will cause the bottle cap 200 and the fluid container to join together. Again, it will be appreciated that any number of suitable closing means may also be utilized to seal the container with the cap 200.

Referring to FIG. 10B, the base cap 212 also includes a generally cylindrical neck 270 extending upward from the top outer side 214 of the base cap 212. The neck 270 bounds an opening 272 extending through the base cap 212. The base cap 212 additionally includes a pair of upstanding stanchions 274 spaced away from the neck 270 and extending upward from the top outer side 214. Each of the upstanding stanchions 274 includes a pivot notch 276 adapted to pivotably support a closure flap 278, which is illustrated in FIG. 9.

The closure flap 278 includes a pair of pivot tabs 280 constructed and arranged such that when the closure flap 278 is assembled with the bottle cap 200, the closure flap 278 is supported between the two upstanding stanchions 274 by placing the pivot tabs 280 within the respective pivot notches 276 of each of the stanchions 274. Additionally, the closure flap 278 includes an elongated closure top 282 and a secondary sealing gasket 284 in the form of an annular ring extending downward from the closure top 282 and sized so as bear against the neck 270 at the opening 272. In this example, the secondary sealing gasket 284 bears against the inner surface of the neck 270. However, the secondary sealing gasket 284 may optionally and/or additionally bear against the outer surface and/or the top edge of the neck 270.

Once assembled, the closure flap 278 is pivotable between a first position (FIG. 10A) and a second position (FIG. 10B). In the first position, the closure top 282 and the secondary sealing gasket 284 bears against the neck 270 to close the opening 272 and form a seal. In the second position, the closure flap 278 and the secondary sealing gasket 284 are pivoted away from the neck 270 and the opening 272, allowing fluid to freely flow through the opening 272.

It will be appreciated that while the closure flap 278 is described as being pivotably retained by a pair of upstanding stanchions 274 and pivot notches 276, the closure flap 278 may be pivotably retained by any number of suitable means, including for example, by attachment to the base cap 212, the neck 270, or any other suitable attachment location. Moreover, while the closure flap 278 is described as being pivotable within the stanchions 274, it will be understood that the actual attachment means may be any suitable arrangement, including any combination of rotation, translation, and/or other suitable movement.

Turning now FIG. 9 in this example, the closure flap 278 is formed of two separate parts including a flap support portion 290 and a closure flap gasket portion 292. The support portion 290 has a top outer side 294, an underside 296 and bounds an opening 298 (hidden by material in FIGS. 10A, 10B) extending through the support portion 294 and passing between the top outer side 294 and the underside 296. The support portion 290 is formed of any suitable material, but preferably is formed of the same material as the base cap 212. The closure flap gasket portion 292 is integrally molded to and bonded with the support portion 290 to fill the opening 298. The flap gasket portion 292 includes the secondary sealing gasket 284 extending downward from the under surface of the closure flap gasket portion 292. The closure flap gasket portion 292 is similarly formed of any suitable material having a durometer lower than the material forming the support portion 290, but preferably is formed of the same material as the overlayer 230 and the gasket 232.

In each of the disclosed embodiments, the base caps 12, 112, 212 of the bottle caps 10, 100, 200, respectively are constructed of an impact copolymer polypropylene having a durometer (hardness) of approximately 68 shore D on the Rockwell M hardness scale. It will be understood, however, that the base caps 12, 112,212 may be constructed of any suitable material including, for example, any thermoplastic within a Rockwell M hardness range of 15 to 100 shore D, and preferably within the range of 50 to 80 shore D. This may include Polyvinyl Chloride (PVC), polypropylene or copolymer polypropylene, polyethylene or copolymer polyethylene, polyester or polyester alloy, styrene based materials such as HIPS, ABS or ABS alloys, acrylics, or any other suitable material.

Additionally, each of the overlayers 30, 130,230 and the gaskets 32, 132, 232, respectively, are simultaneously formed of the same material which is a thermoplastic vulcanizate having a durometer of approximately 75 shore A, and preferably within the range of 20 to 95 shore A. It will be understood, however, that the overlayer and the gasket may be constructed of any suitable material, as long as the durometer of the chosen material is less than the durometer of the material chosen for the base cap (12,112, 212). For example, the material may be any thermoset elastomer, thermoplastic elastomer (TPE), or thermoplastic, such as, but not limited to styrene-butadiene rubber, butadiene rubber, nitrile rubber, thermoplastic polyurethane, thermoplastic vulcanizate, thermoplastic olefin, styrene-ethylene-butadienes-styrene copolymers or block polymers (SEBS), silicones, ethyl-vinylacetate, or other suitable material.

Still further, it will be appreciated that in each embodiment, the base cap, the overlayer, and gasket, may be integrally molded together during a dual material injection process described below, and therefore the chosen materials should be compatible for such a molding process.

Now, turning to the method of forming the various embodiments of the bottle caps of the present disclosure, it will be understood that the caps are preferably manufactured by a dual material injection apparatus. Specifically, the caps are manufactured by integrally molding the base cap and overlayer/gasker portion within the same manufacturing process. For clarity, the particular disclosed method of manufacture will be described in conjunction with the first embodiment of the bottle cap, but will be equally applicable to all other embodiments of the present disclosure. Thus, in this example, the method for forming the respective bottle caps of the present disclosure includes the following steps:
(a) molding the base cap 12 of the bottle cap 10 of a first material having a first durometer. The molding process forming the top outer side 14, the underside 16, the perimeter 18, the skirt wall 20 extending downward from the perimeter 18, and the apertures 28 extending through the base cap 12.
(b) integrally molding the overlayer 30 of the bottle cap of a second material having a second durometer lower than the durometer of the base cap 12. The overlayer 30 covering and bonded to at least a portion of the outer surface 26.
(c) integrally molding the gasket 32 to the underside 16 of the base cap 12, simultaneously with the overlayer 30 by injecting the gasket material through the apertures 28- The gasket 32 thereby extending from and bonding to at least a portion of the underside 16 being and connected to the overlayer 30 via the apertures 28.

In an exemplary method of manufacturing, the dual material injection apparatus is set up with at least two molding stations. In the first station, the dual material injection apparatus molds the base cap 12. Thereafter, the apparatus rotates the molded base cap 12 within the apparatus to the second mold station, wherein the dual material injection apparatus simultaneously molds the overlayer 30 and the gasket 32. Meanwhile, during molding of the overlayer 30 and the gasket 32 on the first bottle cap, a second bottle cap can be molded in the first station, thereby maximizing molding throughput. Once the apparatus completes the botile cap 10 within the second station, the cap 10 maybe ejected and any desired finishing may be performed.

Although Particular examples of a bottle cap and a method of molding the same have been disclosed and described herein in accordance with the teachings of the present invention, the scope of coverage of this patent is not limited thereto. On the contrary, this patent covers all embodiments of the teachings of the invention that fairly fall within the scope of permissible equivalents.

## Claims

1. A bottle cap comprising:
a base cap having a top outer side, an underside, a perimeter, and a skirt wall extending downward from the perimeter having an exterior side and an interior side, and an outer surface formed by the top outer side and the exterior side of the skirt wall, the base cap formed of a first material having a first durometer, and having at least one aperture passing through the base cap between the top outer side and the underside;
an overlayer integrally molded onto at least a part of the outer surface of the base cap, the overlayer formed of a second material having a second durometer lower than the first durometer of the base cap; and
a gasket formed of the second material on the underside of the base cap simultaneously with the overlayer, and being spaced away from the interior side of the skirt wall, the gasket and the overlayer being integrally connected through the at least one aperture.

2. The bottle cap of claim 1, wherein the first durometer is within a range of approximately 50 shore D to 80 shore D.

3. The bottle cap of claim 1, wherein the second durometer is within a range of approximately 20 shore A to 95 shore A.

4. The bottle cap of claim 1, wherein the gasket is an annular ring.

5. The bottle cap of claim 1, wherein the gasket is circular.

6. The bottle cap of claim 1, wherein the gasket has a rectangular cross section.

7. The bottle cap of claim 1, wherein the first material is a thermoplastic, and the second material is selected from one of a thermoset elastomer, a thermoplastic elastomer, and a thermoplastic.

8. The bottle cap of claim 1, wherein the overlayer is molded onto a part of the top outer side of the base cap.

9. The bottle cap of claim 1, wherein the overlayer is molded onto the entire exterior side of the skirt wall.

10. The bottle cap of claim 1, wherein the overlayer includes at least one grip enhancement,

11. The bottle cap of claim 1, wherein the overlayer includes a plurality of circumferentially spaced apart recesses formed in the overlayer.

12. The bottle cap of claim 1, wherein the overlayer includes a plurality of circumferentially spaced apart bumps formed on the overlayer.

13. The bottle cap of claim 1, further comprising a tether device having a first end in the fonn of a circular ring adapated to interference fit to a fluid container, and a second end in the form of a cap connector adapted to snap fit to the base cap, the circular ring and the cap connector coupled to one another by a tether.

14. The bottle cap of claim 13, wherein the base cap includes a molded depression having an upstanding perimeter lid retention wall including a retention rib extending radially outward around the top, outer surface of the lid retention wall, and wherein the cap connector includes a cap retention wall extending downward from the cap connector including a cap retention rib extending radially inward around the bottom, inner surface of the cap retention wall, the lid retention wall adapted to frictionally retain the cap retention wall.

15. The bottle cap of claim I, wherein the top outer side of the base cap includes an elongated neck extending upward from the top outer side bounding an opening extending through the base cap, and wherein the bottle cap further comprises a closure spout shiftable on the elongated neck between a first position wherein the closure spout closes the opening of the neck and a second position wherein the opening of the neck is open.

16. The bottle cap of claim 1, wherein the top outer side of the base cap includes a neck extending upward from the top outer side bounding an opening extending through the base cap, and a pair of upstanding stanchions spaced away from the neck and extending upward from top outer side, and wherein the bottle cap further comprises a closure flap pivotable on the stanchions between a first position wherein the closure flap closes the opening of the neck, and a second position wherein the closure flap opens the opening of the neck.

17. A container assembly comprising:
a bottle having an exterior wall bounding a bottle interior, an opening and a bottle neck;
a bottle cap having a base cap including a skirt wall extending downward from the base cap, an inner surface extending under the base cap and over an interior surface of the skirt wall, and an outer surface extending over the base cap and over an exterior surface of the skirt wall, the base cap formed of a first material and having at least one aperture passing through the base cap between the outer surface and the inner surface;
an overlayer integrally molded onto at least a part of the outer surface and formed of a second material; and
a gasket formed of the second material and integrally molded with the overlayer to at least a portion of the inner surface of the base cap through the at least one aperture, and spaced away from the interior surface of the skirt wall, wherein the gasket bears against a portion of the bottle to seal the opening.

18. The assembly of claim 17, wherein the gasket and the overlayer are integrally connected through the at least one aperture

19. The assembly of claim 17, wherein the first material has a first durometer and the second material has a second duromter lower than the first material.

20. The assembly of claim 17, wherein the gasket is an annular ring.

21. The assembly of claim 17, wherein the gasket is circular.

22. The assembly of claim 17, wherein the first material is a thermoplastic, and the second material is selected from one of a thermoset elastomer, a thermoplastic elastomer, and a thermoplastic.

23. The assembly of claim 1, wherein the overlayer includes at least one grip enhancement.

24. A method of molding a bottle cap, the method comprising the steps of:
molding a base cap of a first material having a first durometer, the base cap including a top, a perimeter, a contiguous skirt will extending downward from the perimeter, an outer surface extending over the top and skirt wall, an inner surface extending under the top and skirt wall, and at least one aperture extending through the base cap between the outer surface and the inner surface;
integrally molding an overlayer to at least a part of the outer surface of the base cap, the overlayer formed of a second material having a second-durometer lower than the durometer of the first material; and
integrally molding a gasket to the inner surface of the base cap through the at least one aperture and simultaneously with the overlayer, the gasket extending from and bonded to at least a portion of the inner surface of the base cap and integrally connected to the overlayer through the at least one aperture.

25. The method of claim 24, including the step of integrally molding at least one grip enhancement to the overlayer.

26. The method of claim 24, including the step of integrally molding the gasket to the inner surface of the base cap in the shape of an annular ring.
